# EUROPEAN PATENT APPLICATION

(11) **EP 3 553 579 A1**
(43) Date of publication of application: **16.10.2019**
(21) Application number: 17879457.4
(22) Date of filing: 06.12.2017
(51) Int. Cl.: G02B 6/44, H01R 13/52

(54) **OPTICAL/ELECTRIC JUNCTION BOX, AND OPTICAL/ELECTRIC CONNECTION SYSTEM AND CONNECTION METHOD**

(30) Priority: 06.12.2016 CN 201611110233
(71) Applicant: Nokia Shanghai Bell Co., Ltd., Shanghai 201206 (CN)
(72) Inventor: ZHOU, Xiaofei, Shanghai 201206 (CN); ZHANG, Lujun, Shanghai 201206 (CN); DIETMAR, Brunsch, 30179 Hannover (DE); ROBERT, Zorad, 30179 Hannover (DE); DAI, Yujun, Shanghai 201206 (CN)
(74) Representative: DREISS Patentanwälte PartG mbB
(86) International application number: PCT/CN2017/114841
(87) International publication number: WO 2018/103668

(57) **Abstract**

The invention provides an photoelectric hybrid connection system, wherein the photoelectric hybrid connection system includes a photoelectric hybrid distribution box (2), an photoelectric hybrid main feeder assembly (1) and a fan-out assembly (3); The photoelectric hybrid main feeder assembly (1) is terminated with a photoelectric hybrid main feeder connector (101), and the photoelectric hybrid main feeder connector (101) is matched with the photoelectric hybrid input end connector (201) of the photoelectric hybrid distribution box (2). The fan-out assembly (3) comprises corrugated tubes (302), a plurality of fan-out structures (301) connected to corrugated tubes (302), and a hybrid photoelectric jumper connector (303); The photoelectric hybrid jumper connector (303) is matched with the photoelectric hybrid output end connector (202) of the photoelectric hybrid distribution box (2). The advantages of the invention are as follows: it reduces field connections and fixation work which fan-out requires, reduces the number of lines to be manipulated, and thus reduces the probability of misoperation. It has better waterproof performance and enhances the robustness of the whole optical fiber links.

## Description

### Technical Field

The invention relates to the field of communication technology, in particular to a photoelectric hybrid distribution box, a photoelectric hybrid connection system and a connection method.

### Background

Mobile base station comprises BBU (Base band unit), PSU (power supply unit), and RRU (radio remote unit) that has to be connected to each other. The connection between BBU, PSU and RRU contains data link through optical fiber and power link through power wires.

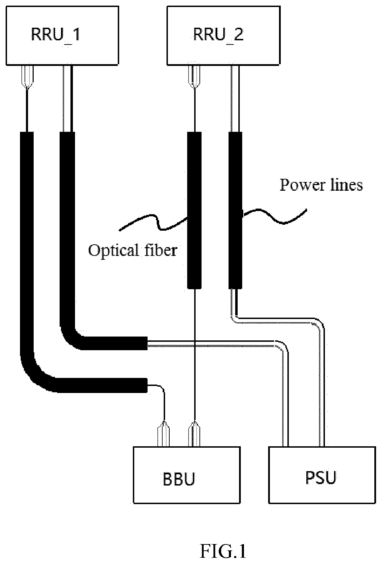

One kind of current solution is separate DC power cable /optical fiber cable solution (see FIG. 1). In this solution, BBU and PSU are connected through independent optical fiber and power wires. In this case, many optical cables and power cables will be fixed on tower when there are many RRU in one base station.

For easy quick installation and cost saving, so called hybrid cable is used that combines optical fibers and power wires under one corrugated tube and jacket. The connection is needed between one big hybrid riser that combines optical fibers and power wires for several RRUs and each individual small hybrid jumper that combines optical fibers and power wires for only one RRU.

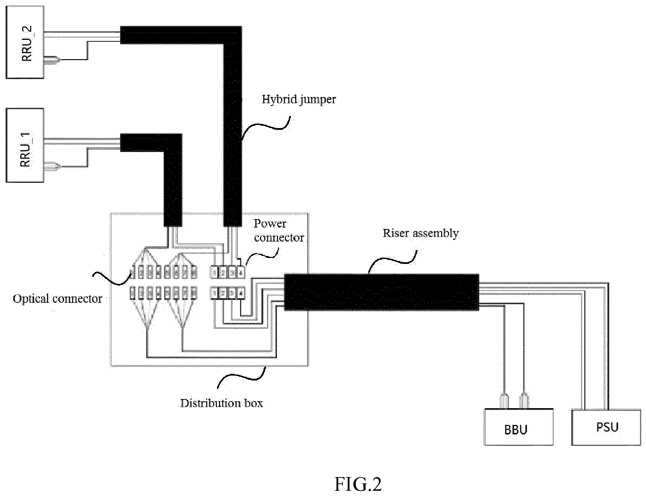

The current hybrid connection solutions are mainly two kinds. The first hybrid connection solution is shown in FIG. 2. A called non waterproof hybrid riser assembly supporting several RRUs, has many separate powers and optical branches on two sides of big riser.. On riser assembly, the branches are terminated by power and optical connectors. A called hybrid jumper at the end supporting one RRUs, has less separate powers and optical branches on two sides of small hybrid cable. On hybrid jumper, the branches are terminated by power and optical connector. One riser assembly is connected to several jumpers (usually 4) through a waterproof distribution box..

The problem with this solution is that it needs to open the distribution box on the field for the photoelectric connection between the riser assembly and the jumper, and the wrong connection may be caused during the opical connection work.

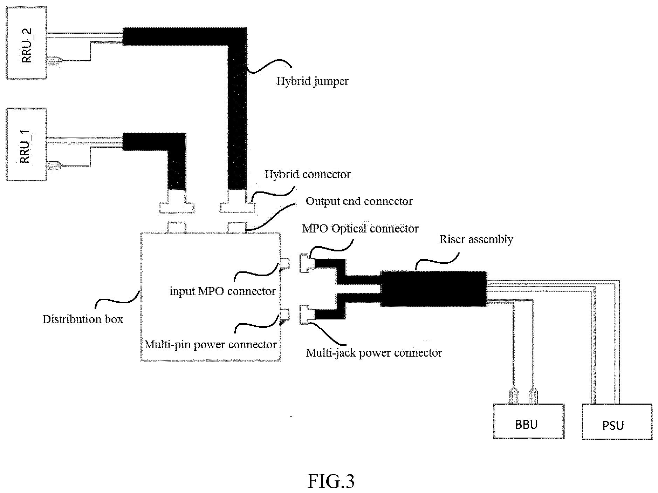

The second hybrid connection solution (refer to FIG. 3) is more advanced than the first solution: it includes a waterproof hybrid riser assembly supporting several RRUs, has only two separate power and optical branches on top side of the riser. On riser assembly, the optical branch terminated by a MPO(Multi-fiber pull off) connector and power branch is terminated by multi-jack power connectors(and multi-pin power connector).

Wherein, the hybrid connector supporting a RRU hybrid jumper is an outdoor hybrid connector (usually 2 power pins and 4 optical ferrule), which is located on down side of small hybrid cable..

The distribution box has two separate photoelectric input end connector fixed at the bottom. The fiber input end comprises a multi-fiber MPO connector, and the power input end is a multi-pin power connector. A plurality of photoelectric hybrid output connectors fixed on the box are used to connect the riser assembly and the hybrid jumper respectively.

Compared with the first solution, this solution has the advantage of removing lots of Power, optical connector inner connection work on field. But the solution still needs to design a waterproof and robust fan-out structure to separate fiber and power branches on top side of the riser. Two branches also bring more field installation, branch fixation work. And also at area especially tropical area, optical fiber of jumper at top of tower is always damaged by bird's pecking to cause break of whole fiber link (data link). So there needs to be a faster, simpler installation solution that protects the fiber, saves costs, and provides a robust connection between RRU and BBU.

It can be seen that the main problems existing in the prior art include: Power and optical branches at top side of riser, which increases work of field connection to distribution box, branches fixation work, and it is easy to cause wrong connection. Specific robust waterproof fan-out structures are required, thereby increasing the cost and fixation work of field installations.

### Summary of the Invention

The invention provides a photoelectric hybrid distribution box, a photoelectric hybrid connection system and a connection method.

According to one aspect of the present invention provides a photoelectric hybrid distribution box (2), wherein, the photoelectric hybrid distribution box (2) has a photoelectric hybrid input end connector (201) fixed at the bottom of the distribution box and a plurality of photoelectric hybrid output end connectors (202) fixed on the panel (203) of the photoelectric hybrid distribution box, The photoelectric hybrid output end connector (202) is located between the plane at the panel (203) where it is located and the plane at the bottom panel of the distribution box.

According to one aspect of the invention, an photoelectric hybrid connection system is also provided, wherein the photoelectric hybrid connection system includes an photoelectric hybrid distribution box (2) as described in any of claims 1 to 5, an photoelectric hybrid main feeder assembly (1) and a fan-out assembly (3); Wherein, the photoelectric hybrid main feeder assembly (1) is terminated with a photoelectric hybrid main feeder connector (101), and the photoelectric hybrid main feeder connector (101) is matched with the photoelectric hybrid input end connector (201) of the photoelectric hybrid distribution box (2). The fan-out assembly (3) comprises corrugated tubes (302), a plurality of fan-out structures (301) connected to the corrugated tubes (302), and an optoelectronic hybrid jumper connector (303); the photoelectric hybrid jumper connector (303) is matched with the photoelectric hybrid output end connector (202) of the photoelectric hybrid distribution box (2).

According to one aspect of the invention, a method for hybrid photoelectric connection is also provided, wherein the method adopts the hybrid photoelectric connection system, wherein the method includes the following steps:
- coordinate the photoelectric hybrid main feeder connector (101) with the photoelectric hybrid input end connector (201) so that the photoelectric hybrid main feeder is connected to the photoelectric hybrid distribution box (2);
- coordinate the photoelectric hybrid output end connector (202) of the photoelectric hybrid distribution box (2) with the photoelectric hybrid jumper connector (303) of the fan-out assembly (3) respectively, so as to connect the photoelectric hybrid branch to the fan-out assembly (3);
- push the corrugated tubes (302) into the port opening of the sector structure (301) to realize the connection between the corrugated tubes and the fan-out structures (301), and use one or more groups of such connections to divide the lines contained in the photoelectric hybrid branch line to obtain the branches needed to connect to RRU.

Compared with prior art, the invention has the following advantages: The photoelectric hybrid connection system according to the invention, the input , output of the distribution box adopt photoelectric hybrid lines, thereby reducing the field connections and fixation work which fan-out requires, and the invention simply adopt the matched joint which has the function fool-proofing, which is convenient for docking, reducing the number of lines to be manipulated and thus reducing the probability of misoperation, and, the distribution box panel design and fan-out assembly combinations according to the invention, has better waterproof performance, and the cables are protected by corrugated tubes, avoiding the situations of bird's pecking, so as to enhance the robustness of the entire optical fiber links.

### Attached Drawings

Other features, purposes and advantages of the invention will become more apparent by reading the detailed description of the non-restrictive embodiment made by reference to the attached drawings below:
FIG. 1 illustrates a connecting solution between BBU and RRU in the prior art;
FIG. 2 illustrates a hybrid photoelectric connection means in the prior art;
FIG. 3 illustrates another hybrid photoelectric connection means in the prior art;
FIG. 4 illustrates the schematic diagram of a photoelectric hybrid connection system according to the invention;
FIG. 5 illustrates the schematic diagram of a photoelectric hybrid main feeder assembly according to the invention;
FIG. 6 illustrates the schematic diagram of a fan-out assembly according to the invention;
FIG. 7a and 7b respectively illustrates the schematic diagram of the front and side of a photoelectric hybrid distribution box according to the invention;
FIG. 7c, FIG. 7d and FIG. 7e respectively illustrates the schematic diagram of another photoelectric hybrid distribution box according to the invention.
FIG. 8a illustrates the schematic diagram of the structure of the photoelectric hybrid main feeder connector in a photoelectric hybrid main feeder assembly according to the invention;
FIG. 8b shows a schematic diagram of an input end connector fixed on a photoelectric hybrid distribution box according to the invention.

The like or similar reference signs in the figures represent like or similar components.

### Detailed Embodiments

The present invention is further described in detail in combination with the attached drawings.

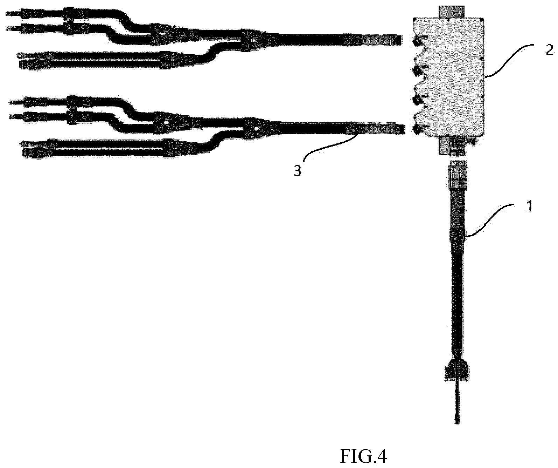

FIG. 4 shows a schematic diagram of a hybrid photoelectric connection system according to the invention. According to the invention, the photoelectric hybrid connection system includes photoelectric hybrid main feeder assembly 1, photoelectric hybrid distribution box 2 and fan-out jumper assembly 3.

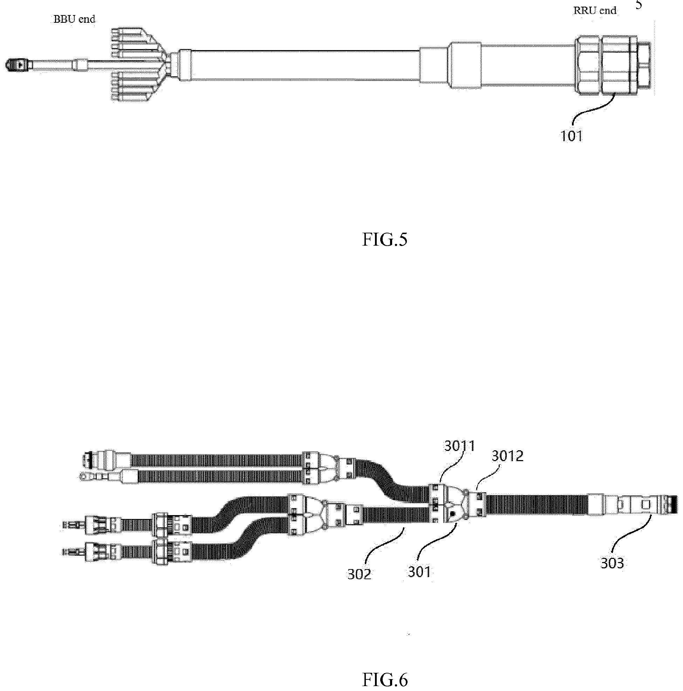

As shown in FIG. 5, photoelectric hybrid main feeder assembly 1 is terminated with a photoelectric hybrid main feeder connector 101

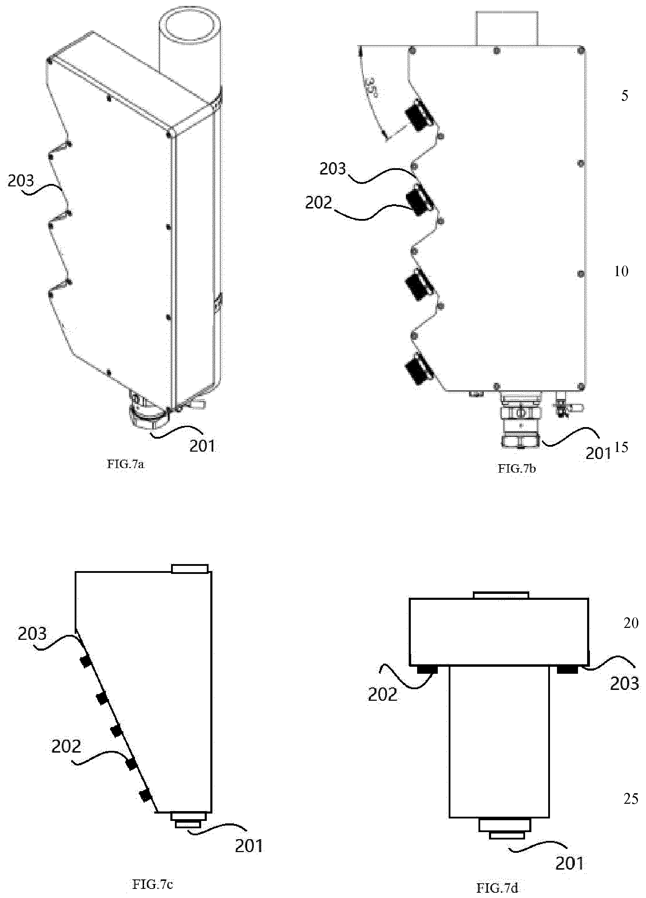

Refer to FIG. 7a to FIG. 7e. The photoelectric hybrid distribution box 2 has a photoelectric hybrid input end connector 201 fixed at the bottom of the distribution box and a plurality of photoelectric hybrid output end connectors 202 fixed on panel 203 of the photoelectric hybrid distribution box, the photoelectric hybrid output end connector (202) is located between the plane at the panel (203) where it is located and the plane at the bottom panel of the distribution box.

Preferably, a distribution box 2 may have a plurality of said panel 203.

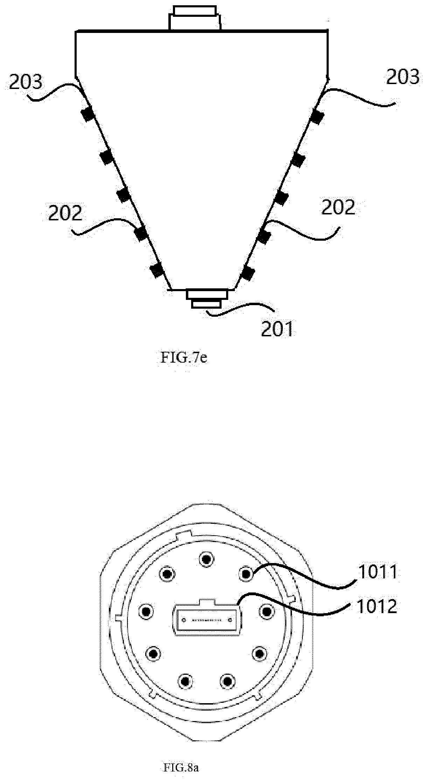

For example, see FIG. 7c to FIG. 7e. In FIG. 7c, photoelectric hybrid output end connector 202 of each photoelectric hybrid output end is located on the inclined panel 203, the inclined panel 203 has a certain angle with the horizontal plane. In FIG. 7d, panel 203 where each the photoelectric hybrid output end connectors 202 are located faces the ground and is parallel to the ground. In FIG. 7e, each photoelectric hybrid output connector 202 of distribution box 2 is located on two inclined panels 203, which have certain angles with the horizontal plane respectively, and the angles with the horizontal plane of the two inclined panels can be different.

Wherein, the number of photoelectric hybrid output connector 202 in the distribution box is determined based on the number of fiber cores and power lines contained in the main feeder, as well as the number of power lines and fiber lines required by RRU.

For example, the distribution box shown in FIG. 7a and Fig. 7d can support four photoelectric hybrid output connectors, while the distribution box shown in FIG.7c can support five output connectors.

Those skilled in the art should be able to determine the number of photoelectric hybrid output connector 202 supported by each distribution box according to the actual situation and needs, which will not be described here.

Preferably, the panel 203 where the photoelectric hybrid output end connector 202 is located, forms a certain angle with the ground plane downward so that the photoelectric hybrid output connector (202) fixed on the panel is located between the plane at the panel (203) where it is located and the plane at the bottom panel of the distribution box.

For example, see FIG. 7b, where panel 203 forms a 35° angle with the vertical plane and 55° angle with the horizontal plane.

The advantage of the invention is that it can make the photoelectric hybrid distribution box 2 have better waterproof performance and effectively prevent the risk from the photoelectric hybrid output connector 202 being soaked by rain water.

Fan-out assembly 3 includes corrugated tubes 302, a plurality of fan-out structures 301 connected with the corrugated tubes 302, and photoelectric hybrid jumper connector 303; wherein, the fan-out structure 301 includes an input port 3012 and two output ports 3011, and the port opening of each port with sealing rubber, so that corrugated tubes 302 constitute a sealed and waterproof fan-out assembly 3 after pushing into the port opening.

Preferably, the fan - out structure 301 is u-shaped.

In the photoelectric hybrid connection system, the photoelectric hybrid main feeder connector 101 is matched with the photoelectric hybrid input end connector 201 of the photoelectric hybrid distribution box 2. The photoelectric hybrid jumper connector 303 of fan-out assembly 3 is matched with the photoelectric hybrid output connector 201 of photoelectric hybrid distribution box 2.

Specifically, the photoelectric hybrid main feeder 1 connected with the BBU is connected to the photoelectric hybrid main feeder box 2 through the coordination of the photoelectric hybrid main feeder connector 101 and the photoelectric hybrid input end connector 201. Each photoelectric hybrid branch separated from photoelectric hybrid distribution box 2 is connected to the fan-out assembly 3 to reach the RRU through the coordination of the photoelectric hybrid output connector 202 and the photoelectric hybrid jumper connector 303.

Preferably, the number of fan-out structure 301 adopted by fan-out assembly 3 can be determined based on the number of optical fibers and power lines contained in the photoelectric hybrid main feeder 1 and the number of branches required at the RRU end.

For example, refer to FIG. 6 for the photoelectric hybrid branch divided from photoelectric hybrid distribution box 2, which includes 4 fiber and 2 power lines. By adopting the fan-out structure 301, the branch can be divided into four lines, namely, one power line, one ground line and two optical fiber lines.

Alternatively, five fan-out structures 301 can be further adopted, which can be divided into two power lines and four optical fiber lines, 6 lines in all.

By using any number of this fan-out structure, it can simply and conveniently fan-out each cable to obtain the required number of lines, so it has a very broad application scenario. Moreover, huge amount of costs can be saved without customizing a specialized fan-out structure as the prior art requires. In addition, by pushing the corrugated tubes into the port opening of the fan-out structure, the sealing rubber in the terminal forms a waterproof structure, so as to have better waterproof performance.

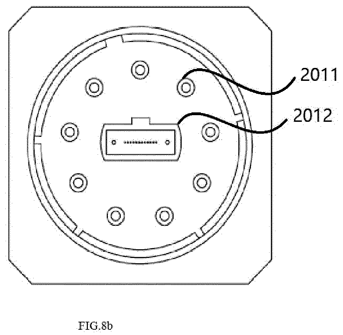

Preferably, referring to FIG. 8a and FIG. 8b, according to the photoelectric hybrid connection system of the invention, photoelectric hybrid input end connector 201 of the distribution box can include 9 male power pins 2011 and female 12 fiber or 24 fiber MPO plug 2012; The photoelectric hybrid main feeder connector 101 may include 9 female power jacks 1011 and a male 12 fiber or 24 fiber MPO plug.

Preferably, the photoelectric hybrid input end connector 201 and the photoelectric hybrid main feeder connector 101 can respectively include fool-proofing key and fool-proofing key slot to avoid misoperations during installation.

When in use, t coordinating the photoelectric hybrid main feeder connector with the photoelectric hybrid input end connector so that the photoelectric hybrid main feeder is connected to the photoelectric hybrid distribution box; And, coordinating the photoelectric hybrid output end connector of the photoelectric hybrid distribution box with the photoelectric hybrid jumper connector of the fan-out assembly respectively, so as to connect the photoelectric hybrid branch to the fan-out assembly; And, pushing the corrugated tubes into the port opening of the sector structure to realize the connection between the corrugated tubes and the fan-out structures, and use one or more groups of such connections to divide the lines contained in the photoelectric hybrid branch line to obtain the branches needed to connect to RRU.

The photoelectric hybrid connection system according to the invention, the input , output of the distribution box adopt photoelectric hybrid lines, thereby reducing the field connections and fixation work which fan-out requires, and the invention simply adopt the matched joint which has the function fool-proofing, which is convenient for docking, reducing the number of lines to be manipulated and thus reducing the probability of misoperation, and, the distribution box panel design and fan-out assembly combinations according to the invention, has better waterproof performance, and the cables are protected by corrugated tubes, avoiding the situations of bird's pecking, so as to enhance the robustness of the entire optical fiber links.

For those skilled in the art, it is evident that the invention is not limited to the details of the above exemplary embodiments and can be realized in other concrete forms without deviating from the spirit or basic characteristics of the invention. In any case, therefore, embodiments shall be considered exemplary and non-restrictive, and the scope of the invention shall be limited by the claims attached to it and not by the foregoing description, so as to include in the invention all changes in the meaning and scope of the equivalent elements falling within the claims. Any accompanying drawing marks in the claim shall not be regarded as the claim involved in the restriction. Furthermore, it is clear that the word "including" does not exclude other units or steps, and that the singular does not exclude the plural. The multiple units or devices stated in the system claim may also be realized by a unit or device through software or hardware. First, second class words are used to indicate names, not any particular order.

## Claims

1. A photoelectric hybrid distribution box (2), wherein, the photoelectric hybrid distribution box (2) has a photoelectric hybrid input end connector (201) fixed at the bottom of the distribution box and a plurality of photoelectric hybrid output end connectors (202) fixed on the panel (203) of the photoelectric hybrid distribution box, The photoelectric hybrid output end connector (202) is located between the plane at the panel (203) where it is located and the plane at the bottom panel of the distribution box.

2. The photoelectric hybrid distribution box (2) according to claim 1, wherein, the panel (203) where the photoelectric hybrid output end connector (202) is located, forms a certain angle with the ground plane downward so that the photoelectric hybrid output connector (202) fixed on the panel is located between the plane at the panel (203) where it is located and the plane at the bottom panel of the distribution box.

3. The photoelectric hybrid distribution box (2) according to claim 1 or 2, wherein, the number of the photoelectric hybrid output end connector (202) on the photoelectric hybrid distribution box (2) is related to the number of fiber cores and power pins supported by the photoelectric hybrid input end connector (201).

4. The photoelectric hybrid distribution box (2) according to any of claim 1 to 3, wherein, the photoelectric hybrid input end connector (201) has a multi-fiber pull off (MPO) plug (2012) and multiple power pins (2011).

5. The photoelectric hybrid distribution box (2) according to claim 4, wherein, the photoelectric hybrid input end connector (201) includes 9 power pins (2011), and the multi-fiber pull off (MPO) plug (2012) is 12 fiber or 24 fiber.

6. A photoelectric hybrid connection system, wherein, the photoelectric hybrid connection system includes a photoelectric hybrid distribution box (2) as described in any of claims 1 to 5, an photoelectric hybrid main feeder assembly (1) and a fan-out assembly (3); Wherein, the photoelectric hybrid main feeder assembly (1) is terminated with a photoelectric hybrid main feeder connector (101), and the photoelectric hybrid main feeder connector (101) is matched with the photoelectric hybrid input end connector (201) of the photoelectric hybrid distribution box (2). The fan-out assembly (3) comprises corrugated tubes (302), a plurality of fan-out structures (301) connected to corrugated tubes (302), and a photoelectric hybrid jumper connector (303); The photoelectric hybrid jumper connector (303) is matched with the photoelectric hybrid output end connector (202) of the photoelectric hybrid distribution box (2).

7. The photoelectric hybrid connection system according to claim 6, wherein, the fan-out structure (302) includes an input port (3012) and two output ports (3011) and the port opening of each port with sealing rubber, so that corrugated tubes (302) constitute a sealed and waterproof fan-out assembly (3) after pushing into the port opening.

8. The photoelectric hybrid connection system according to claim 7, wherein, the number of the fan-out structure (301) adopted by fan-out assembly (3) is determined based on the number of optical fibers and power lines contained in the photoelectric hybrid main feeder assembly (1), and the number of branches required at the RRU end.

9. The photoelectric hybrid connection system according to any of claim 6 to 8, wherein, the photoelectric hybrid main feeder connected to BBU is connected to the photoelectric hybrid distribution box (2) through the coordination of the photoelectric hybrid main feeder connector (101) and the photoelectric hybrid input end connector (201); Each photoelectric hybrid branch separated from the photoelectric hybrid distribution box (2) is connected to the fan-out assembly (3) to reach the RRU through the coordination of the photoelectric hybrid output connector (202) and the photoelectric hybrid jumper connector (303).

10. The photoelectric hybrid connection system according to claim 9, wherein, the photoelectric hybrid input end connector (201) includes 9 male power pins (2011) and female 12 fiber or 24 fiber MPO plug (2012); The photoelectric hybrid main feeder connector (101) comprises 9 female power jacks (1011) and a male 12 fiber or 24 fiber MPO plug (1012).

11. A method for hybrid photoelectric connection, wherein, the method adopts a hybrid photoelectric connection system as described in claim 9 or 10 wherein the method includes the following steps:
- coordinating the photoelectric hybrid main feeder connector (101) with the photoelectric hybrid input end connector (201) so that the photoelectric hybrid main feeder is connected to the photoelectric hybrid distribution box (2);
- coordinating the photoelectric hybrid output end connector (202) of the photoelectric hybrid distribution box (2) with the photoelectric hybrid jumper connector (303) of the fan-out assembly (3) respectively, so as to connect the photoelectric hybrid branch to the fan-out assembly (3);
- pushing the corrugated tubes (302) into the port opening of the sector structure (301) to realize the connection between the corrugated tubes and the fan-out structures (301), and use one or more groups of such connections to divide the lines contained in the photoelectric hybrid branch line to obtain the branches needed to connect to RRU.
